# EUROPEAN PATENT APPLICATION

(11) **EP 1 585 011 A1**
(43) Date of publication of application: **12.10.2005**
(21) Application number: 03786393.3
(22) Date of filing: 26.12.2003
(51) Int. Cl.: G06F 1/04

(54) **CLOCK CONTROL DEVICE, MICROPROCESSOR, ELECTRONIC DEVICE, CLOCK CONTROL METHOD, AND CLOCK CONTROL PROGRAM**

(30) Priority: 08.01.2003 JP 2003002605
(71) Applicant: SONY CORPORATION, Tokyo 141-0001 (JP)
(72) Inventor: Hanaki, Hirokazu, c/o Sony Corporation, Tokyo 141-0001 (JP)
(74) Representative: Thévenet, Jean-Bruno
(86) International application number: PCT/JP2003/017060
(87) International publication number: WO 2004/063912

(57) **Abstract**

The number of pulses of an operation clock to a microprocessor can be easily and instantaneously controlled and changed, in which a clock control device 2 supplies a clock of the same pulse number as the system clock 8, while a bus busy signal 10 that indicates a bus 4 is in a busy state from a microprocessor 1 is existing, and supplies a clock having random gap of a reduced number of pulses of the system clock 8, while the bus busy signal 10 is not existing, respectively to the microprocessor 1 as operation clock.

## Description

### TECHNICAL FIELD

The present invention relates to a clock control device and a clock control method that control the number of pulses of an operation clock to a microprocessor; to a microprocessor including the clock control device; to an electronic apparatus that includes the microprocessor as control processing means; and to a clock control program for controlling the number of pulses of the operation clock to the microprocessor.

### BACKGROUND ART

When there is a temporal margin for the processing of software that is executed on a microprocessor, it is possible to reduce the power consumption by reducing an operation clock frequency to the microprocessor. Although the reduction of the operation clock frequency for the microprocessor has been carried out in existing microprocessors, in actuality such mechanism is usually obtained by altering the frequency in the source of generating a clock. That is to say, output frequency of specific circuits such as an oscillator and PLL circuit that are the oscillation sources, is variably controlled.

As prior art, a microcomputer having two or more different clock modes is described in Published Japanese Patent Application No. 2000-217173, however the description is insufficient regarding actual operation of two or more different clock modes.

As mentioned above, in the case where the frequency of an operation clock to a microprocessor is decreased, the output frequency of specific circuits such as an oscillator and PLL circuit that are the oscillation sources has been controlled variably. However, in order to perform that control, assuming that the output frequency of the oscillator and PLL circuit are variable, a series of procedure has been required such that the frequency of the operation clock is changed after suspending the supply of the operation clock to the microprocessor, and further considerable time in proportion to the microprocessor operation frequency has been needed for the change. Hence, when software operated on a microprocessor is developed, the necessary time to change operation clock frequency of the microprocessor must be considered and many other restrictions exist in the development.

An object of the present invention is to provide a clock control device which can easily and instantaneously control and change the operation frequency of a microprocessor (where clock pulse width is unchanged and the pulse number is changed) by not changing the clock frequency (clock pulse width) of the clock oscillation source but changing the number of pulses of the clock.

Another object of the present invention is to provide a microprocessor including such clock control device.

Further another object of the present invention is to provide an electronic apparatus which includes such microprocessor as control processing means.

Still another object of the present invention is to provide a clock control method in which the frequency of an operation clock for a microprocessor can be controlled and changed easily and instantaneously.

Still another object of the present invention is to provide a clock control program with which the number of pulses of the operation clock to a microprocessor is easily and instantaneously controlled and changed in accordance with an interrupt factor based on an interrupt signal to the microprocessor.

### DISCLOSURE OF THE INVENTION

The first aspect of the present invention is a clock control device which controls the number of pulses of an operation clock to a microprocessor at least based on whether or not there is a bus busy signal indicating a bus busy state from the microprocessor and which includes clock control means that supplies the microprocessor with a system clock while the bus busy signal is existing and that supplies the microprocessor with a clock having random gap of a reduced number of pulses of the system clock while the bus busy signal is not existing, respectively as an operation clock.

The second aspect of the present invention is a clock control device according to the first aspect of the present invention, in which when an interrupt signal based on any of interrupt factors is supplied to the microprocessor, pulse number control data that is set in advance corresponding to the interrupt factor is transferred to the clock control means by a program through the bus from the microprocessor and is set as microprocessor-clock-pulse-number control data, and then the number of microprocessor operation clock pulses is controlled.

The third aspect of the present invention is a clock control device according to the first aspect of the present invention, in which when an interrupt signal based on any of interrupt factors is supplied to the clock control means, pulse number control data that is set in advance corresponding to the interrupt factor is set as microprocessor-clock-pulse-number control data, and then the number of microprocessor operation clock pulses is controlled.

The fourth aspect of the present invention is a microprocessor including a clock control device, in which the clock control device includes clock control means which supplies the microprocessor with a system clock while a bus busy signal is existing and which supplies the microprocessor with a clock having random gap of a reduced number of pulses of the system clock while the bus busy signal is not existing, respectively as an operation clock.

The fifth aspect of the present invention is an electronic apparatus including as control processing means a microprocessor which has a clock control device, in which the clock control device includes clock control means which supplies the microprocessor with a system clock while a bus busy signal is existing and supplies the microprocessor with a clock having random gap of a reduced number of pulses of the system clock while said bus busy signal is not existing, respectively as an operation clock.

The sixth aspect of the present invention is a clock control method in which the number of pulses of an operation clock to a microprocessor is controlled at a source supplying the operation clock at least based on whether or not there is a bus busy signal from the microprocessor indicating a bus busy state, including the steps of: supplying the microprocessor with an operation clock of the same pulse number as the system clock while the bus busy signal is existing, and supplying the microprocessor with a clock having random gap of a reduced number of pulses of the system clock while the bus busy signal is not existing.

The seventh aspect of the present invention is a clock control method according to the sixth aspect of the present invention, further including, prior to executing the step of supplying a clock having random gap, the step of setting pulse number control data that is set in advance corresponding to each interrupt factor based on an interrupt signal to the microprocessor in accordance with any interrupt factor, by transferring through a program from the microprocessor to a source supplying an operation clock through the bus as microprocessor-clock-pulse-number control data.

The eighth aspect of the present invention is a clock control method according to the sixth aspect of the present invention, further including, prior to executing the step of supplying a clock having random gap, the step of setting pulse number control data that is set in advance corresponding to the interrupt factor based on an interrupt signal to a source supplying an operation clock in accordance with any of interrupt factors as microprocessor-clock-pulse-number control data.

The ninth aspect of the present invention is a clock control program which controls the number of pulses of an operation clock to a microprocessor at a source supplying the operation clock based on a pulse number control data in accordance with an interrupt signal to a microprocessor from the outside, executing processing which includes the steps of distinguishing an interrupt factor each time when the interrupt signal is supplied from the outside, and setting pulse control data that is set in advance corresponding to the interrupt factor distinguished at the interrupt factor distinction step by transferring through a program to the source supplying an operation clock as microprocessor-clock-pulse-number control data.

According to the above aspects of the present invention, while a bus busy signal is being output from a microprocessor, an operation clock equivalent to a system clock is input to the microprocessor unconditionally; however, while the bus busy signal is not being output, a system clock having random gap controlled with suitably reducing the number of pulses is input to the microprocessor as an operation clock, whereby the power consumption can be reduced.

Therefore, a clock control device in which the number of pulses of an operation clock to the microprocessor can easily and simultaneously be controlled and changed is provided.

Further, a microprocessor including such clock control device is provided.

Further, an electronic apparatus including such microprocessor as control processing means is provided.

Furthermore, a clock control method is provided by which the number of pulses of operation clock to the microprocessor can easily and simultaneously be controlled and changed.

Furthermore, a clock control program is provided by which the number of pulses of operation clock to the microprocessor can easily and simultaneously be controlled and changed based on an interrupt signal to a microprocessor in accordance with an interrupt factor.

### BRIEF DESCRIPTION OF DRAWINGS

FIG. 1 is a diagram showing a system configuration of an embodiment of a microprocessor system according to the present invention;
FIG. 2 is a diagram showing a configuration of an embodiment of a clock control device according to the present invention;
FIG. 3 is a diagram showing an operation flow of an embodiment of a clock control program executed on receiving an interrupt signal;
FIG. 4 is a diagram showing a schematic configuration in general of a portable game apparatus for performing breeding simulation; and
FIG. 5 is a chart showing the processing flows in the case where the number of pulses of an operation clock to CPU is controlled in the breeding game apparatus.

### BEST MODE FOR CARRYING OUT THE INVENTION

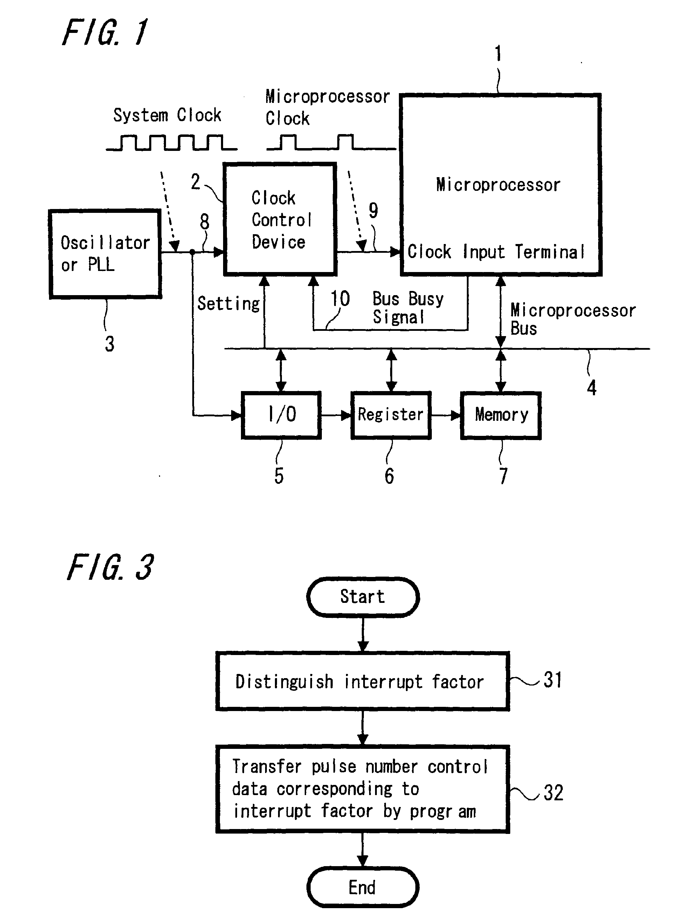

Hereinafter, an embodiment of the present invention is explained with reference to FIGS. 1 to 5.

First, a microprocessor system according to the present invention is explained, and FIG. 1 shows a system configuration thereof.

As shown in FIG. 1, various kinds of devices such as an input/output device 5, register 6, memory 7 are connected in parallel to a microprocessor 1 through a microprocessor-bus 4, and a clock control device 2 according to the present invention is also connected to the microprocessor 1 as well. Although the system configuration including only one microprocessor is assumed in this embodiment, the present invention can also be applied to a multi-processors system including a plurality thereof.

A system clock 8 is generated in a clock oscillator 3, and the system clock 8 is input as an operation clock directly to various kinds of devices such as the input/output device 5, register 6, memory 7, and clock control device 2. However, the system clock 8 is input to the microprocessor 1 as a microprocessor (operation) clock 9 through the clock control device 2. The clock control device 2 supplies to the microprocessor 1 the same clock pulses as the system clock 8 or a clock controlled with suitably reducing the number of pulses as the microprocessor clock 9 based on whether or not there is a bus busy signal 10 (automatically generated by hardware) from the microprocessor 1 indicating that the microprocessor-bus 4 is actually in busy state, and based on a pulse-number-control data that is set and transferred by a program to the clock control device 2 from the microprocessor 1 through the microprocessor-bus 4.

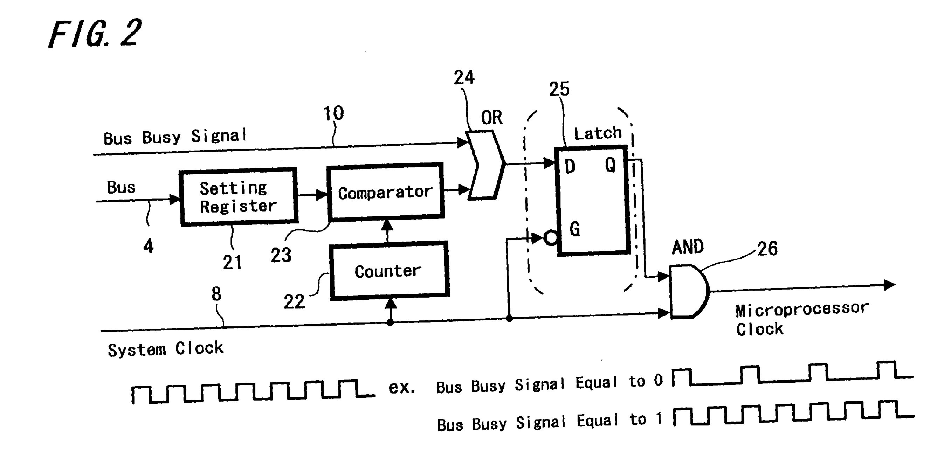

FIG. 2 shows an example of a configuration of the clock control device 2. As shown in the figure, in the case where the bus busy signal 10 from the microprocessor 1 exists, in other words, when the signal state is in "1" state, during the "1" state, the bus busy signal 10 passes through an OR-gate 24 and D-latch 25 unconditionally and acts on an AND-gate 26 as a gate control signal that permits the pass of the system clock 8, as a result, a clock of the same pulse number as the system clock 8 is obtained as the microprocessor clock 9 during a comparatively long period. Hereupon, as a signal for obtaining the system clock 8 as the same pulse number as the microprocessor clock 9, various kinds other than the bus busy signal 10 are conceivable, and in the case where these signals are also considered, these signals may be logically added with the bus busy signal and then are input to an OR-gate 24.

However, in the case where no bus busy signal 10 from the microprocessor 1 exists, in other words, when the signal state is in "0" state, the gate control signal in this case that permits the pass of the system clock 8 is generated periodically from a comparator 23 based on the microprocessor-clock-pulse-number control data that is set in advance such that the pulse number is variable, namely, pulses are output and stopped, as a result, the system clock 8 controlled with suitably reducing the number of pulses is obtained as the microprocessor clock 9. Note that, the latch 25 retains an output state of the OR-gate 24 immediately before the start time of the system clock 8, and the output is retained while the system clock 8 is in "1" state, and the latch 25 has a function to pass and output the output state as it is while the system clock 8 is in "0" state, however, the latch is not necessarily needed if it is guaranteed that the output state of the OR gate 24 does not change.

Here, when an interrupt signal based on any of interrupt factors is supplied to the microprocessor 1, pulse number control data corresponding to the interrupt factor is set in a setting register 21 as system-clock-pulse-number control data through the microprocessor-bus 4 from the microprocessor 1, whereby the number of pulses of the microprocessor clock 9 is selected and controlled.

As shown in the figure, the system clock 8 is constantly counted by a counter 22 and, for example, if that count value is smaller than a value set in the setting register 21, the comparator 23 outputs "1" state and passes the system clock 8, and if that count value is larger than the set value, the comparator 23 outputs "0" state and the passing of the system clock 8 is stopped. Though the maximum count value of the counter 22 is usually set in advance as a fixed value, the value can be set variably as needed through the bus 4 from the microprocessor 1. Specifically, for example, when setting 99 as the maximum count value of the counter 22, the count value is incremented from 0 through 99, and then again the count value returns to 0, and then again the count value is incremented. In that case, when 50 is set in the setting resister, the system clock 8 is input to the microprocessor 1 while the count value is from 0 through 49, however, the input of the system clock 8 to the microprocessor 1 is suspended while the count value is from 50 through 99. Consequently, the whole pulse number becomes half, whereby the power consumption becomes reduced.

In addition, in the above described example, the pulse number control data corresponding to the interrupt factor set in advance is set in the setting register 21 from the microprocessor 1 each time when an interrupt signal is supplied to the microprocessor 1, however, the transfer and setting of this pulse number control data by a program can be performed not only when an interrupt signal existed but also when there is necessity. Hereupon, if all the pulse-number control data corresponding to interrupt factors that are required from the microprocessor 1 are set in advance in the setting register 21, there is no need of renewed setting in the setting register 21 from the microprocessor 1 each time. If the interrupt signal to the microprocessor 1 is also input to the setting register 21, the pulse-number control data corresponding to the interrupt factor only needs to be immediately selected and set as microprocessor-clock-pulse-number control data. In addition, the maximum count value of the counter 22 is set as a default value in the setting register 21 by a reset signal generated when the power is ON.

Hereupon, the interrupt signal is explained as follows; the interrupt signals are generated corresponding to various interrupt factors in various kinds of devices such as the input/output device 5 and other microprocessors, and these are input to the microprocessor 1 and the setting register 21 through individual interrupt signal lines, and a corresponding interrupt processing is performed in the microprocessor 1; and prior to the execution of the corresponding interrupt processing, the number of pulses of the microprocessor clock 9 to the microprocessor 1 is controlled as mentioned above. Consequently, the interrupt processing in the microprocessor 1 is executed by the microprocessor clock 9 having the number of clock pulses corresponding to the interrupt factors.

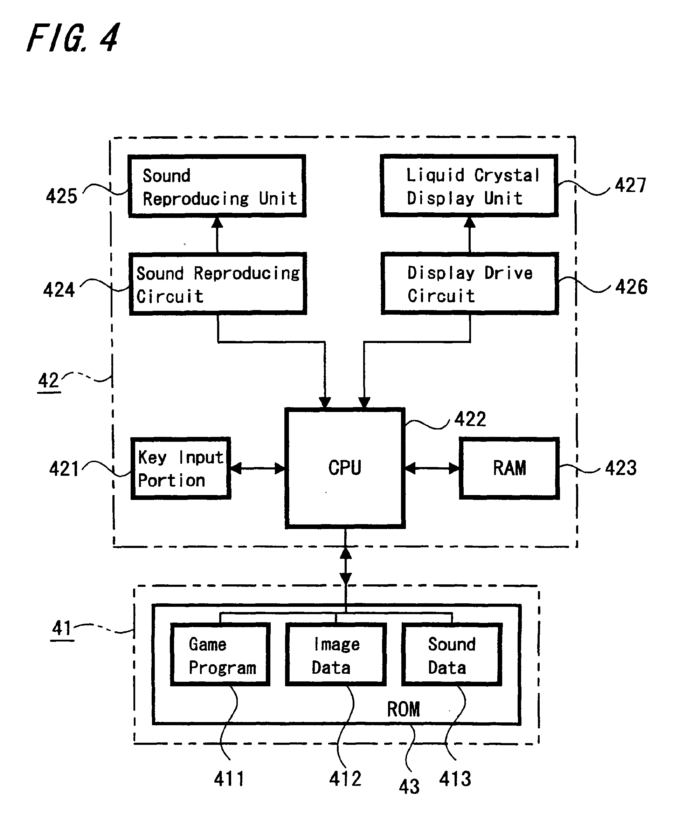

Further, when an interrupt signal based on any of interrupt factors is supplied to the microprocessor 1, the pulse number control data that is set in advance corresponding to the interrupt factor is transferred and set in the setting register 21 by a program as microprocessor-clock-pulse-number control data; as for this, a flow chart of an example of the clock control program is shown in FIG. 3. This clock control program is made to start whenever an interrupt signal exists in the microprocessor 1, and first an interrupt factor is identified when started (processing 31). If the interrupt factor is distinguished, pulse number control data that is set in advance corresponding to that interrupt factor is transferred by a program from the microprocessor 1 and set in the setting register 21 (processing 32). As described above, in the case where the clock control program is executed whenever there is an interrupt signal, the interrupt processing with respect to that interrupt signal is performed by the microprocessor clock 9 corresponding to the interrupt factor.

In this way, when the microprocessor system is configured as a state in which the clock control device is added, data communication between the microprocessor and other devices are performed always in the bus busy state, so that the microprocessor operation clock pulse number can be changed simultaneously without causing any unfavorable influence on the data communication. Hence, the change of the operation clock frequency of the microprocessor by the bus busy signal, interrupt signal or software (clock control program) can be performed by small time units, and therefore power consumption of the system as a whole can be reduced.

As described above, first a clock control device, a microprocessor (system) including the clock control device, an electronic apparatus including the microprocessor as control processing means, and further a clock control method, clock control program and various others are considered as the present invention; and in actuality those are applied to such consumer products as portable type electronic apparatuses (indicating mobile apparatus as a whole such as PDA (Personal Digital Assistant), mobile phone unit, portable CD (Compact Disc)/MD (Mini Disc) player and others), to be particularly efficient. Since a portable type electric apparatus generally uses a battery as the operation power supply, if the power consumption is reduced, frequent battery change and battery charging can be dispensable.

Here, as a portable type electronic apparatus, explanation is made on a portable game apparatus that performs breeding simulation as an example; FIG. 4 schematically shows a configuration thereof in general. In this game apparatus, a virtual character is bred by a player over the long term based on a program of breeding simulation, and the game apparatus itself is made small-sized to be carried by hand.

In the followings, the configuration of the game apparatus is explained further specifically. That is, as shown in FIG. 4, a game apparatus includes in general a cassette 41 in which a game program 411, a plurality of image data 412 and a plurality of sound data 413 are stored in advance in a ROM 43; and a game apparatus main unit 42 capable of being connected to the cassette 41, which carries on the game program 411 of the cassette 41. The game apparatus main unit 42 also includes: a RAM 423 which carries on the program 411; a liquid crystal display unit 427 which displays the image data 412 of the ROM 43 as a picture; a sound reproducing unit 425 which reproduces the sound data 413 as audible sound; a key input portion 421 for inputting intention of the player; a CPU 422 which commands the program 411 to be carried on, and in accordance with progress of the program 411 and the key input operation from the player, which transfers appropriate image data from among the plurality of image data 412 to a display drive circuit 426 to be displayed on the liquid crystal display 427 and which transfers appropriate sound data from among the plurality of sound data 413 to the sound reproducing unit 425 through a sound reproducing circuit 424 to be output; and a battery as a operation power supply (not shown in the figure).

When the game is carried out, a player uses the key input and buttons and starts the breeding game that breeds a character displayed on the liquid crystal display over a long term. In the middle of progress of the program, the appearance of a picture and voice are performed as if the character were demanding food and play from the player, and the player performs the key input to respond thereto, and a game proceeds as such.

The problem with respect to the breeding game apparatus as described above is that the time at which the demand to the player is carried out from the game apparatus side is not known beforehand, whereby a disadvantage is raised on the power consumption if the CPU 422 remains in the same state even though the apparatus side enters a stage in which the game apparatus side demands nothing of player. Therefore, in the period before entering the stage in which the apparatus side demands of the player after entering the stage in which the game apparatus side demands nothing of the player, the operation clock of low frequency (here, low frequency does not mean that the width of a clock pulse is reduced, but means that the number of clock pulses is reduced) compared with the operation clock of a normal frequency is considered to be used as the operation clock for the CPU 422. Hereupon, the installation of the clock control device of the present invention in the game apparatus is considered.

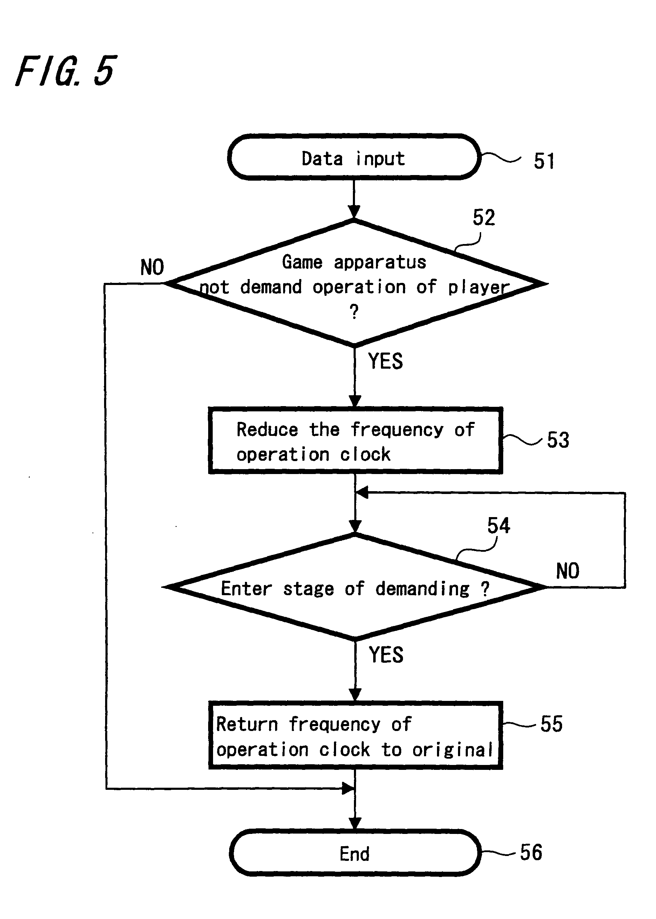

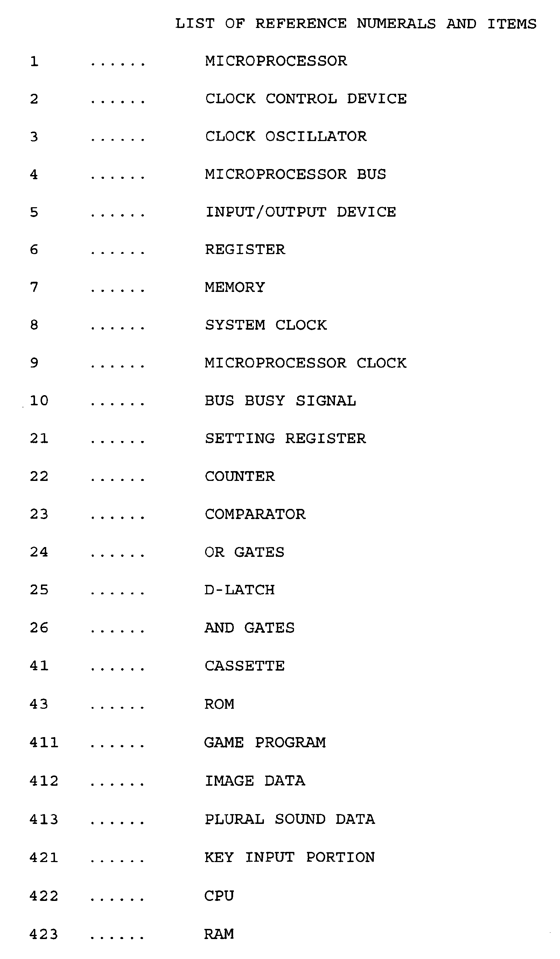

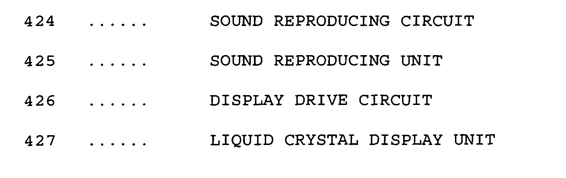

FIG. 5 shows a processing flow in the case where the number of pulses of the operation clock to the CPU 422 is controlled. As shown in the figure, after a player performs the key input and the data is input, it is judged whether or not the game apparatus demand the operation of the player (processing 51, 52). When it is judged that an operation demand is stopped, the operation clock, namely the number of pulses, to the CPU 422 is reduced by the clock control device (processing 53). Then after that, it is judged whether or not the apparatus has entered the stage that demands the operation (processing 54). When it is judged that the apparatus has entered the stage of demanding the operation, the operation clock, namely the number of pulses, to the CPU 422 is returned to the original number of pulses by the clock control device (processing 54, 55).

The number of pulses of operation clock to the CPU 422 can also be changed corresponding to a kind of game software. The number of pulses of the operation clock to the CPU 422 is set to a normal value with respect to game software, for example, a fight game that has large data size and time, and on the other hand, the number of pulses of the operation clock to the CPU may be set to lower value than the above game, with respect to game software such as a Japanese chess game and mah-jongg game and others that has small data size and time.

The invention proposed by the inventor was specifically explained based on the embodiments; however, it should be understood that the present invention is not limited thereto and various modifications, combinations, sub-combinations and alterations may be considered within the scope thereof.

## Claims

1. A clock control device which controls the number of pulses of an operation clock to a microprocessor at least based on whether or not there is a bus busy signal indicating a bus busy state from said microprocessor, comprising:
clock control means which supplies the microprocessor with a system clock while the bus busy signal is existing and which supplies the microprocessor with a clock having random gap of a reduced number of pulses of the system clock while said bus busy signal is not existing, respectively as an operation clock.

2. The clock control device according to claim 1,
wherein in the case where an interrupt signal based on any of interrupt factors is supplied to the microprocessor, pulse number control data that is set in advance corresponding to the interrupt factor is transferred to the clock control means by a program through the bus from the microprocessor to be set as microprocessor-clock-pulse-number control data, and the number of microprocessor operation clock pulses is controlled.

3. The clock control device according to claim 1,
wherein in the case where an interrupt signal based on any of interrupt factors is supplied to the clock control means, pulse number control data that is set in advance corresponding to said interrupt factor is set as microprocessor-clock-pulse-number control data, and the number of microprocessor operation clock pulses is controlled.

4. A microprocessor comprising a clock control device,
wherein the clock control device includes,
clock control means which supplies a microprocessor with a system clock while a bus busy signal is existing and which supplies said microprocessor with a clock having random gap of a reduced number of pulses of the system clock while said bus busy signal is not existing, respectively as an operation clock.

5. An electronic apparatus comprising as control processing means a microprocessor having a clock control device,
wherein said clock control device includes clock control means which supplies a microprocessor with a system clock while a bus busy signal is existing and which supplies said microprocessor with a clock having random gap of a reduced number of pulses of the system clock while said bus busy signal is not existing, respectively as an operation clock.

6. A clock control method in which the number of pulses of an operation clock to a microprocessor is controlled at a source supplying the operation clock at least based on whether or not there is a bus busy signal indicating a bus busy state from said microprocessor, comprising the steps of:
supplying the microprocessor with an operation clock of the same pulse number as a system clock while the bus busy signal is existing; and
supplying the microprocessor with a clock having random gap of a reduced number of pulses of the system clock while said bus busy signal is not existing.

7. The clock control method according to claim 6, further comprising the step of:
prior to an execution of said step of supplying the clock having random gap,
setting pulse number control data that is set in advance corresponding to each interrupt factor based on an interrupt signal in accordance with each interrupt factor to the microprocessor as microprocessor-clock-pulse-number control data by transferring to a source supplying the operation clock through the bus from the microprocessor by a program.

8. The clock control method according to claim 6, further comprising the step of:
prior to an execution of said step of supplying the clock having random gap,
setting pulse number control data that is set in advance corresponding to an interrupt factor based on an interrupt signal in accordance with any of interrupt factors to a source supplying an operation clock as microprocessor-clock-pulse-number control data.

9. A clock control program which controls the number of pulses of an operation clock to a microprocessor at a source supplying the operation clock in accordance with a pulse number control data based on an interrupt signal supplied to the microprocessor from the outside, executing the processing that includes:
an interrupt factor distinction step of distinguishing an interrupt factor each time when the interrupt signal supplied from the outside; and
a pulse-number-control-data transfer setting step of setting pulse number control data that is set in advance corresponding to the interrupt factor distinguished at the interrupt factor distinction step by transferring to a source supplying the operation clock by a program as microprocessor-clock-pulse-number control data.
